# EUROPEAN PATENT APPLICATION

(11) **EP 1 657 720 A2**
(43) Date of publication of application: **17.05.2006**
(21) Application number: 05256827.6
(22) Date of filing: 04.11.2005
(51) Int. Cl.: G11B 15/68

(54) **Passive data cartridge pass-through**

(30) Priority: 12.11.2004 US 987263
(71) Applicant: QUANTUM CORPORATION, San Jose, California 95110 (US)
(72) Inventor: Thorson, Thomas A., Colorado Springs, Colorado 80909 (US); Brenner, Corey L., Castle Rock, Colorado 80109 (US)
(74) Representative: Charig, Raymond Julian

(57) **Abstract**

Data storage device pass-through devices, systems incorporating data storage device pass-though devices and methods of using data storage device pass-through devices are described. Extensible storage device holders are capable of passing data storage device into and out of a data storage device library storage unit. The described extensible storage device holder comprises a pass-through housing and one or more extensible supports. The extensible storage device holder vertically passes storage device held within the pass-through housing. Thus, the extensible storage device holder may pass storage device from a first (source) library to a second (target) library. The extensible storage device holder does not require a guide or track connecting the first library and the second library.

## Description

### BACKGROUND

### 1. Field of the Disclosure:

Described herein are devices and methods for manipulating data storage media, particularly devices and methods for transporting storage media between or within storage media libraries.

### 2. Background:

Automated storage systems, including cartridge libraries, are commonly used to store data storage media. One or more individual storage units may contain many data storage devices, as well as multiple media drives for reading from and writing to the storage devices. Automated robotic devices may be used to move storage devices between the various storage cells and to and from the media drives within the storage unit. Individual storage devices may be indexed, and the entire system may be controlled by a device (or devices) capable of coordinating the movement of the storage devices.

One type of storage system includes two or more storage device libraries which may be linked together for coordinated control. With this type of system, each library may include a library housing, a plurality of storage devices (e.g. cartridges) stored in one or more storage device bins within the housing, at least one robotic handling mechanism, and one or more media drives. If multiple libraries are used as part of the same storage system, it may be desirable to coordinate the handling of storage devices between individual storage units. Moving storage devices between libraries may help avoid bottlenecks and delays. For example, if many storage devices in a library storage unit are requested at the same time, delays may result if the number of demanded storage devices exceeds the number of media drives, or the ability of the robotic handlers to process the demand. Thus, it may be desirable to distribute storage devices between library units. Further, if one or more of the storage device drives in a library fails, it may be desirable to transfer storage devices to another library unit having functional drives.

Transfer mechanisms have been developed to transfer storage devices between storage units. These transfer mechanisms typically include additional hardware that provide or assists movement of storage devices between individual libraries. For example, motors with lead screws, belts and rack/pinion mechanisms are used to transfer storage devices between libraries. These mechanisms add material costs and take up space within the storage units.

Most transfer mechanisms capable of transferring storage devices between library storage units include a track or guide connecting the storage units; storage devices are moved from one storage unit to another storage unit along this track. Further, most transfer mechanisms transfer storage devices between side-by-side storage units. For example, U.S. Patent Number 6,648,574 describes a transfer mechanism for a storage system in which storage devices are passed between laterally adjacent tape libraries along a frame or track spanning the distance between the two tape libraries. Similarly, U.S. Patent Number 6,751,040, U.S. Patent Number 5,700,125, U.S. Patent Number 6,574,173, and U.S. Patent Number 6,438,623 describe transferring storage devices between storage units using a track.

U.S. Patent Number 6,059,509 describes transferring storage devices between vertically stacked storage modules. A guide rail is provided along which a pass-through tray moves. The guide rail extends through pass-through ports in both library storage modules.

Accordingly, there is a need for a self-contained storage device pass-through device. In particular, there is a need for a storage device pass-through device which does not require a rack or guide rail extending between the storage device libraries. None of the cited prior art suggests the device and methods described and claimed below.

### BRIEF SUMMARY

Described here is an extensible storage device holder for moving a storage device comprising a pass-through housing and at least one extensible support coupled to the pass-through housing. The pass-through housing is configured to hold one or more storage devices. "Storage device" refers to any kind of data storage device, including, but not limited to, magnetic tape media devices (e.g. cassettes, including cassettes have 1 or more reels), optical storage media devices, and semiconductor storage media devices. The extensible support is configured to translate between a collapsed configuration corresponding to a first position of the pass-through housing and an extended configuration corresponding to a second position of the pass-through housing. The extensible support limits lateral motion of the pass-through housing during translation between the first position and the second position.

In some versions, the first position of the pass-through housing and the second position of the pass-through housing define an axis which is perpendicular to the major plane of the pass-through housing. The major plane of the pass-through housing may be the bottom support region of the pass-through housing. In some versions, the first position of the pass-through housing is located vertically with respect to the second position.

In some versions, the extensible storage device holder further comprises a chassis to which the extensible support is coupled. The chassis may be further configured to seat the pass-through housing when the extensible support is in the collapsed configuration. In one version, the extensible support comprises a scissor-lift support. In one version the extensible support comprises a telescoping member. More than one extensible support may be used, and any combination of different sizes and different types of extensible supports may be used in the extensible storage device holder. For example, three scissor-lift supports may be used.

In some versions, the extensible storage device holder further comprises an actuator configured to translate the pass-through housing between a first position and a second position that is located vertically to the first position. The actuator may be a manual or an automatic actuator. Any type of actuator may be used (e.g. mechanical, electrical, magnetic, pneumatic, etc.). In one version, the actuator is a z-translator. In one version, the actuator is the z-translator of the robotic manipulator.

In some versions, the extensible storage device holder further comprises a biasing member for altering the force required to translate the pass-through housing between the first position and the second position. The biasing member may be a passive biasing member (e.g. a spring, a dashpot, etc) or an active biasing member (e.g. a motor or other actuator). In some versions, the extensible storage device holder further comprises a releasable lock configured to secure the pass-through housing in a predetermined position. The same lock, or an additional lock, may also be used to secure the pass-through housing in a second position (or any number of other positions). The lock may act by directly securing the pass-through housing, or the lock may act by immobilizing the extensible support (or supports).

Also described herein are extensible storage device holders for moving a storage device vertically comprising a pass-through housing and three extensible scissor-lift support members coupled to the pass-through housing. The scissor-lift support members are configured to translate between a collapsed configuration corresponding to a first position of the pass-through housing and an extended configuration corresponding to a second position of the pass-through housing that is vertical to the first position. The extensible supports substantially limit lateral motion of the pass-through housing during translation between the first position and the second position.

Also described herein are library storage units adapted to vertically pass and accept storage devices comprising a first storage device library unit including a first library cavity, and an extensible storage device holder located substantially within the first library cavity. The extensible storage device holder is configured to move at least one storage device vertically in or out of the first library cavity. The extensible storage device holder comprises a pass-through housing configured to hold one or more storage devices and at least one extensible support coupled to the pass-through housing. The extensible support is configured to translate between a collapsed configuration corresponding to a first position of the pass-through housing and an extended configuration corresponding to a second position of the pass-through housing that is vertical to the first position. Further, the extensible support substantially limits lateral motion of the pass-through housing during translation between the first position and the second position. The first storage device library unit is configured to stack with a second storage device library unit so that storage devices may be passed between the first and second storage device library cavities by the extensible storage device holder.

In one version of the library storage unit, the library storage unit includes at least one sensor that is configured to indicate the location of a pass-through housing. The sensor may be any type, including but not limited to optical, electrical, mechanical, or pressure-based sensors. The sensor may be located anywhere in the library storage unit or on the extensible support.

In one version, the extensible storage device holder in the library storage unit comprises three extensible supports. The extensible supports may be scissor-lift support, telescoping supports, or any combination thereof.

Also described herein are storage device storage systems for use with more than one storage device storage unit. The storage device storage systems comprise a first storage device library, a second storage device library, an extensible storage device holder, and an actuator. The first and second storage device libraries each include a library cavity. The first storage device library is located vertically relative to the second storage device library. The extensible storage device holder is located substantially within the first storage device library cavity. This extensible storage device holder comprises a pass-through housing configured to hold one or more storage devices and at least one extensible support coupled to the pass-through housing. The extensible support is configured to translate between a collapsed configuration corresponding to a first position of the pass-through housing within the first storage device library and an extended configuration corresponding to a second position of the pass-through housing within the second storage device library. The extensible support substantially limits lateral motion of the pass-through housing during translation between the first position and the second position. The actuator is located within the first storage device library and is configured to translate the pass-through housing of the extensible storage device holder between the first position and the second position.

In some versions of the storage device storage system, the extensible storage device holder comprises three scissor-lift extensible supports.

Also described herein are methods of transferring storage devices between a first storage device library and a second storage device library comprising inserting a storage device from a first storage device library into an extensible storage device holder, and translating the pass-through housing containing the storage device between the first position and the second position. The extensible storage device holder is located substantially within the first storage device library, and comprises a pass-through housing and at least one extensible support coupled to the pass-through housing. The pass-through housing is configured to hold one or more storage devices. The extensible support is configured to translate between a collapsed configuration corresponding to a first position of the pass-through housing and an extended configuration corresponding to a second position of the pass-through housing located substantially within the second storage device library. The extensible support substantially limits lateral motion of the pass-through housing during translation between the first position and the second position.

Also described herein are methods of transferring a storage device vertically between a first storage device library and a second storage device library. The methods comprise inserting a storage device into an extensible storage device holder, and translating the pass-through housing of the extensible storage device holder containing the storage device from a first position to a second position vertical to the first position. The extensible storage device holder is located substantially within the first storage device library, and comprises a pass-through housing configured to hold one or more storage devices and three extensible scissor-lift supports coupled to the pass-through housing. The scissor-lift supports are configured to translate between a collapsed configuration corresponding to a first position of the pass-through housing within the first storage device library and an extended configuration corresponding to a second position of the pass-through housing within the second storage device library. The scissor-lift supports substantially limit lateral motion of the pass-through housing during translation between the first position and the second position.

In some versions, the method of transferring a storage device vertically between a first storage device library and a second storage device library further comprises releasably locking the extensible support in the extended configuration.

The present invention is better understood upon consideration of the detailed description below in conjunction with the accompanying drawings and claims.

### BRIEF DESCRIPTION OF THE DRAWINGS

**Figures 1A** and **1B** show versions of an extensible storage device holder.

**Figures 2A, 2B and 2C** show examples of scissor-lift extensible supports.

**Figures 3A - 3D** show examples of telescoping member extensible supports.

**Figures 4A and 4B** show the extensible storage device holders of Figures 1A and 1B, respectively, when the extensible supports are in an extended position.

**Figure 5** shows a data storage unit comprising an extensible storage device holder.

**Figure 6** shows the extensible storage device holder of Figure 5 in detail.

**Figure 7** illustrates multiple data storage units in which storage devices may be passed between the data storage units using extensible storage device holders.

### DETAILED DESCRIPTION OF THE INVENTION

Described herein are devices for transferring storage devices (e.g. devices comprising storage media) from one storage device unit (e.g. library containing multiple storage devices such as cassettes) to another storage device unit. Storage device units incorporating the transfer devices and methods of using them are also described. The following descriptions of specific materials, techniques, and applications are provided only as examples. Various modifications to the examples described herein will be readily apparent to those of ordinary skill in the art, and the general principles defined herein may be applied to other examples and applications without departing from the spirit and scope of the invention. Thus, the present invention is not intended to be limiting to the examples described and shown, but is to be accorded the scope consistent with the appended claims. The term "storage device" is used to describe any type of data storage device (including different storage media), and is not intended to be limited to one particular type, and includes tape media storage devices, optical media storage devices, solid-state storage devices, and any combination thereof, or any other embodiment of a data storage device.

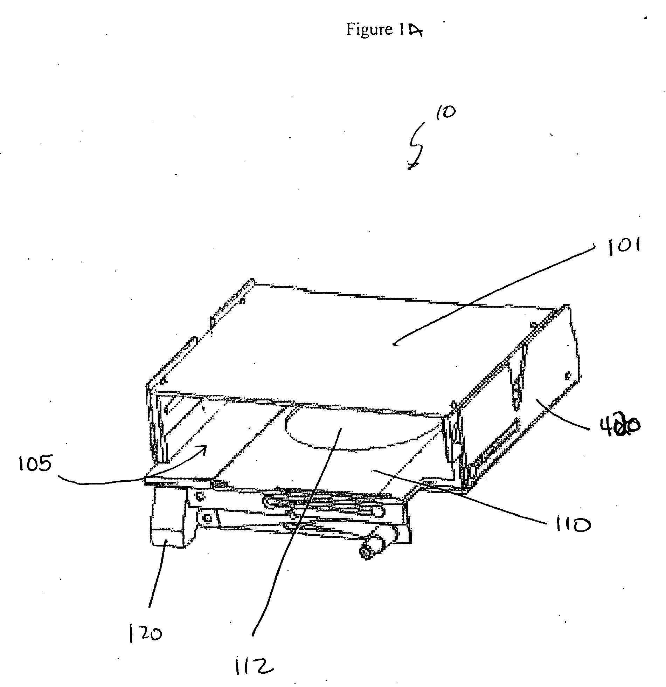

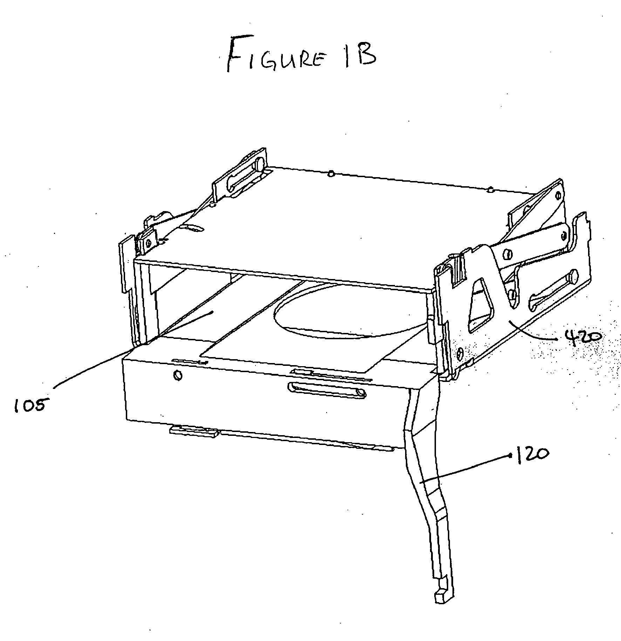

Extensible storage device holders may be used to transfer storage media from one location to another, and may be incorporated as part of a storage system. Examples of extensible storage device holders (also referred to as extendible storage device holder) 10 are illustrated in Figures 1, and 4-7. An extensible storage device holder comprises at least one extensible support coupled to the pass-through housing. The extensible storage device holder may move vertically (e.g. up and down). Motion in the lateral (e.g. side-to-side/back to front) direction is typically restricted or controlled by the extensible support or supports. The extensible support may also be coupled to an adapter, or directly coupled to other storage device holders within a library storage unit.

### Pass-Through Housing

The extensible storage device holder includes a pass-through housing portion that is adapted to hold one or more storage devices. The pass-through housing may be adapted so that at least the inner region of the pass-through housing conforms to the outer dimensions of a storage device. Virtually any kind or shape of data storage device may be used with the holder. For example, Digital linear tape (DLT's) media, LTO media, and DAT/DSS media may all be used with an extensible storage device holder as described herein. In some versions, the shape of the pass-through housing is fixed, and the inner dimension of the pass-through housing does not change. In other versions, the shape of the pass-through housing is adjustable so that the same pass-through housing can be used with storage devices of different dimensions. Furthermore, the pass-through housing may be adapted to hold more than one data storage device, for example, the pass-through housing may have multiple "shelves" that hold multiple data storage devices.

Although the specification and figures illustrate storage devices that are data cartridges (e.g. tape cartridges), one skilled in the art would understand the storage devices compatible with the extensible storage device holders are not limited to data tape cartridges or cassettes.

In general, the pass-through housing supports a data storage device on one or more surfaces. Typically, a pass-through housing has a bottom support region on which a data storage device inserted into the pass-through housing may rest. In some versions, the bottom support region is a flat panel, which may include apertures (e.g. cut-out regions). Apertures may reduce the overall weight of the pass-through housing, possibly helping the performance of the extensible storage device holder by decreasing the weight that is moved when translating the pass-through housing. Apertures in the housing may also provide access to the data storage device from outside of the pass-through housing or extensible storage device holder. The pass-through housing may also be at least partially enclosed on other sides as well. In one version, the pass-through housing is enclosed on five sides, with one side being opened to allow a data storage device to be put into the pass-through housing. Any of the sides (including the top) may be absent or may be only partially enclosed, e.g. may have apertures.

In some versions, the pass-through housing resembles library storage slots (storage device holders) of known library storage systems (see, e.g., U.S. Patent Number 5760995, U.S. Patent Number 6,766,412, U.S. Patent Number 6,097,566, which are herein incorporated by reference in their entirety).

The inside of the pass-through housing may be adapted to secure a data storage device that is stored therein. For example, one or more of the inner surfaces of the pass-through housing may comprise a gripping or anti-slide surface to prevent the storage device from shifting or falling out of the pass-through housing, particularly when it is moved. For example, the inside of the pass-through housing may comprise a rubber or tacky polymer coating. The inside of the pass-through housing may also comprise materials having other beneficial properties, such as static-reducing or moisture-reducing (desiccant) properties. In one version, the inside of the housing is configured to mechanically grip a storage device which is inserted therein (e.g. by compression).

The pass-through housing may be made of any suitable material. Suitable materials include relatively stiff materials that would provide sufficient support for the pass-through housing. Examples include metals (including alloys), plastics, ceramics, or the like, or combinations thereof. In some versions, it is preferable to use materials that are lightweight in order to reduce the weight load that must be translated by the extendable storage device holder.

The outer region of the pass-through housing may also be adapted to couple to one or more extensible supports. In one version, the sides of the pass-through housing comprise attachment sites for extensible supports. For example, attachment sites for an extensible support may extend from the pass-through housing. The outer region of the pass-through housing may also be adapted to receive force from an actuator capable of moving the pass-through housing vertically. In one version, the pass-through housing comprises an actuator engagement region configured to engage an actuator. An actuator may apply force to the actuator engagement region, and this force results in a vertical movement of the pass-through housing.

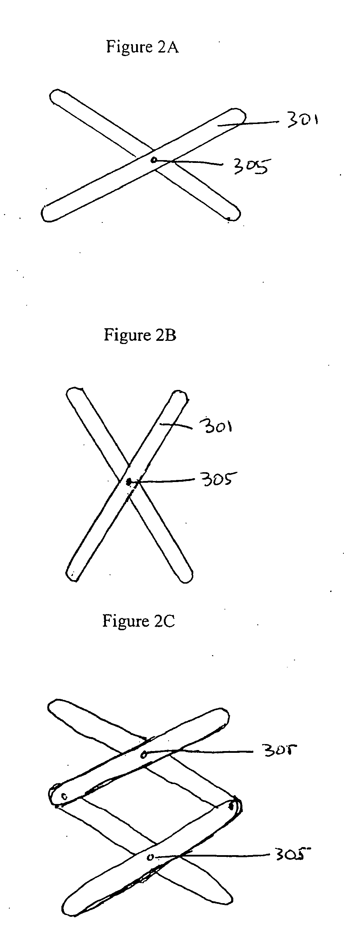

Figure 1A shows an example of an extensible data storage device holder in a collapsed configuration. The pass-through housing **101** has an opening **105** through which a storage device may be loaded. The other sides of the pass-through housing **101** are closed, and the inner portion of the pass-through housing is adapted to hold a single data storage device. The bottom support region **110** of the pass-through housing is shown with a circular aperture **112.** The pass-through housing in Figure 1 also has an actuator engagement region (shown as a tab) **120** which extends from the outer region of the pass-through pad downward. Figure 1B shows another version of an extensible data storage device holder shown in a collapsed configuration. In figure 2B, the actuator engagement region **120** is longer, and is located on the right side, and a different version of an extensible support is shown.

### Extensible support

The pass-through housing is coupled to at least one extensible support. Extensible supports stabilize and support the pass-through housing as it is moved vertically. In some versions, the extensible support permits the pass-through housing to be moved only in the vertical direction (e.g. the z-direction), preventing most (if not all) lateral (e.g. x,y-direction) motion of the pass-through housing. Extensible supports may also stabilize the pass-through housing by keeping the bottom support region of the pass-through housing substantially level.

In some versions, the extensible supports may allow lateral motion of the pass-through housing. In particular, the extensible support may allow limited lateral motion so that the pass-though housing may be aligned within a storage library. For example, when the extensible support extends and passes the pass-through housing from one storage library into a second storage library, the pass-through housing may be adjusted in x, y and z so that the pass-through housing may be accessed by a picker or other device within the second data storage library. The pass-through housing may be adjusted by the same actuator that translates the pass-through housing vertically, or a different actuator may be used. In one version, a passive alignment guide may adjust the pass-through housing in a non-vertical (e.g. lateral) direction. In some versions, the extensible supports may prohibit lateral motion greater than a tenth of an inch, side-to-side. In some versions, the extensible supports may restrict lateral motion greater than about 60 thousandths of an inch. In some versions, an additional movement restriction means may be used to limit lateral motion of the pass-through housing.

In general, an extensible support is a support structure that can shift between a collapsed profile and an extended profile. At least one portion of the extensible support is displaced vertically when the extensible support is translated from the collapsed profile to the extended profile. Examples of extensible supports include, but are not limited to, scissor-lift supports, and telescoping supports. Extensible supports are useful because they may be translated in one direction (e.g. vertically) while remaining substantially stable in other directions (e.g. laterally). Furthermore, extensible supports may be a compact, requiring only a little space, particularly in the collapsed form.

An example of a scissor lift support is shown in Figure 2. Each scissor-lift support has two or more leg members that are joined by pivoting joints **205**. Figure 2A shows a scissor-lift support member in a collapsed state, and Figure 2B shows the scissor-lift support member of Figure 2A in an extended state. Figure 2C shows another scissor-lift support member having four leg members.

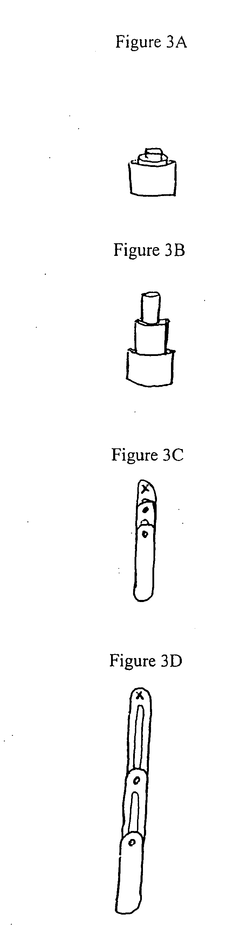

Another version of an extensible support is shown in Figure 3. Figure 3A shows a telescoping support member in a collapsed state and Figure 3B shows the same telescoping member in an extended state. This telescoping member comprises interlocking cylinders. Figure 3C and 3D show a "flat" telescoping support member. Figures 3C and 3D show three segments, though two (or more than three) segments may also be used. Each support member comprises multiple segments that are linked together and my be collapsed (as in Figure 3C) or extended (as in Figure 3D). Other types of extensible supports may also be used, including combinations of different types of extensible supports.

At least one extensible support is coupled to the pass-through housing so that translation of the extensible support from a collapsed profile to an expanded profile results in vertical movement of the pass-through housing. The term "coupled" refers to mechanical coupling; specifically, an extensible support is connected to the pass-through housing so that extensible support is free to translate between the collapsed and expanded configurations, while stabilizing the pass-through housing. An extensible support may be coupled to the pass-through housing anywhere that allows the pass-through housing to move vertically. In some versions, an extensible support is coupled beneath the pass-through housing. For example, a single telescoping extensible support may attach to the center of an outer surface of the pass-through housing (e.g. the underside of the bottom support region or the uppermost external surface of the pass-through housing). In some versions, the extensible supports are coupled to sides of the pass-through housing.

In some versions, the attachment site is fixed. For example, a pass-through housing coupled to four telescoping cylindrical support members may be rigidly connected each of the support members. In some versions, the attachment site is dynamic, so that the connection between the pass-through housing and the extensible member may change, while still remaining connected so that the pass-through housing is supported by the extensible member. For example, a scissor-lift extensible member may be pivotally connected to the pass-through housing. In one version, the pass-through housing connects to the scissor-lift extensible member at a joint between leg members. In another version, the pass-through housing connects to one of the leg members of the scissor-lift extensible support, leaving the other leg member unconnected. In another version, both leg members are connected to the pass-through housing, and one (or both) leg members are connected to the pass-through housing in a slideable channel, allowing regions of the leg members to move relative to each other while translating between collapsed and extended positions.

As described herein, the extensible support translates between a collapsed and an extended configuration. A "collapsed configuration" is not limited to the most collapsed configuration of the extensible support. A collapsed configuration may be any configuration that has a vertical extension of the support that is less than an extended configuration of the extensible support. Furthermore, an "extended configuration" is not limited to the most extended configuration of the extensible support. An extended configuration may be any configuration that has a vertical extension of the support that is greater than a collapsed configuration of the extensible support.

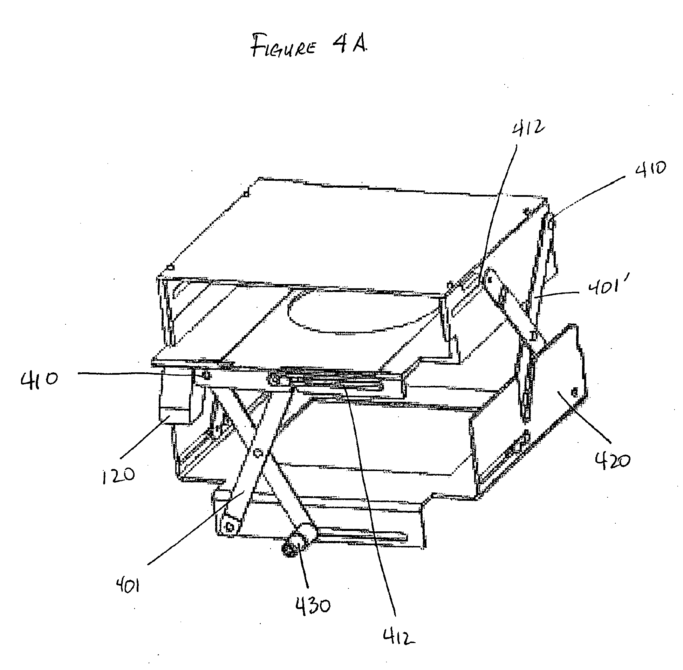

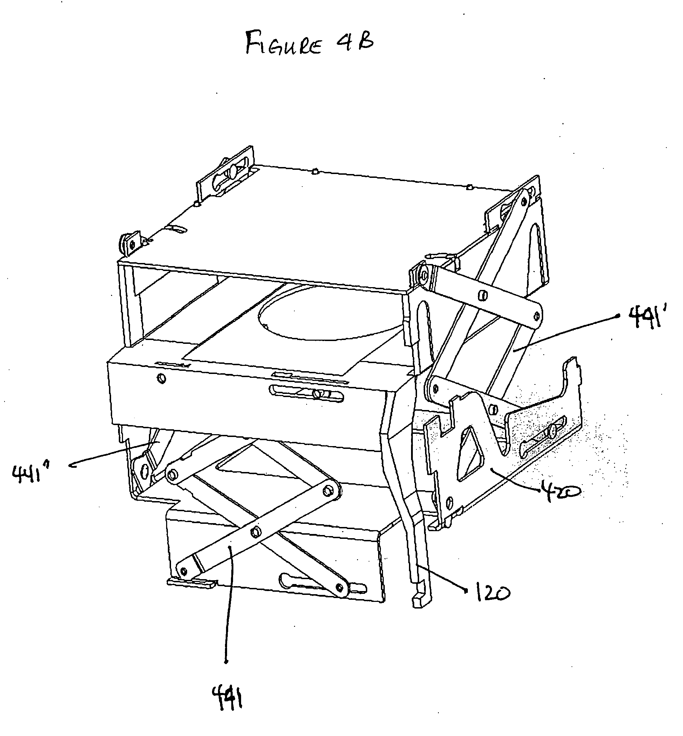

Figure 4A shows the extensible storage device holder of Figure 1A in an extended configuration. In Figure 4A, three scissor-lift extensible supports **401, 401', 401"** are coupled to the sides of the pass-through housing. Each scissor-lift support is joined to the pass-through housing in both a pivoting joint **410** and a slideable channel **412.** The other end of the extensible supports are attached to an extensible storage device holder chassis **420.** In Figure 4A, the chassis **460** seats the pass-through holder when the extensible supports are fully collapsed, as shown in Figure 1A. Figure 4B shows the extensible storage device holder of Figure 1B in an extended configuration. The three scissor-lift extensible supports **441, 441'** and **441"** are coupled to the sides of the pass-through housing.

An extensible storage device holder may optionally include a chassis. In some versions, a chassis is a stiff frame that provides attachment sites for one or more of the extensible supports. The chassis may stabilize the extensible supports, or coordinate their motion. In some versions, it is beneficial to have all of the extensible supports uniformly attached, so that they move together. The chassis may be adapted to have special attachment sites for the extensible supports, or for connection to actuators. The chassis may be adapted to protect the components of the extensible storage device holder. Furthermore, a chassis may simplify attachment of the extensible storage device holder with or within another device. For example, an extensible storage device holder may be to secure an extensible storage device holder in a library storage unit.

An extensible storage device holder may not include a chassis. For example, an extensible storage device holder may be attached to a library storage unit by attaching one end of the extensible support (or supports) to the inside of the library storage unit. In another example, the ends of the extensible supports are attached to a region of an array of storage device holders, or some other region of the library storage unit housing.

### Actuator

The pass-through housing of the extensible storage device holder translates vertically (e.g. up and down) but does not translate substantially laterally (e.g. backwards, forwards and side to side). Thus, storage devices held in the pass-through housing may be transferred from a first position to a second position that is lateral to the first position. The extensible storage device holder may be manipulated by an actuator to move the pass-through housing between a first position and a second position. Virtually any type of actuator capable of applying force to the extensible storage device holder may be used. Manual or automatic actuators may be used with the extensible storage device holder.

In one version, the actuator is a z-translator (e.g. a motor driver) which provides mechanical force against the extensible storage device holder to extend the pass-through housing vertically. For example, the actuator may be the z-motor driver which is used as part of a robotic picker in a library storage device storage system. Examples of such systems may be found in U.S. Patent Number 5,760,995, U.S. Patent Number 6,766,412, U.S. Patent Number 6,097,566. In one version, the z-motor driver contacts an actuator engagement region projecting from the pass-through housing, and moves the pass-through housing vertically (up or down) by manipulating the actuator engagement region. Vertical motion of the pass-through housing extends or collapses the extensible supports, which prevents the pass-through housing from shifting laterally.

In another version, a robotic arm (or picker) already present in a library storage unit is used to control the extendible storage device holder by controlling the extensible supports. Thus, an actuator may apply force directly to the pass-through housing to move the pass-through housing vertically, or an actuator may apply force to the extensible supports to move the pass-through housing vertically. For example, in Figures 1 and 4, one of the extensible supports **401** includes an actuator engagement site that can collapse or extend the scissor-lift extensible support **430.** The actuator engagement site is a knob or handle **430;** lateral motion of this handle results in vertical motion of the scissor-lift support. For example, in Figure 1 the actuator engagement handle is positioned to the far right of the slideable track holding one leg of the scissor-lift support, and the scissor-lift support is in a collapsed configuration. In Figure 4, the same actuator engagement handle is located on the far left on the slideable track, and the scissor-lift support is in an extended position. If the actuator moves the handle from the left to the right, the extensible support will translate from an extended to a collapsed configuration; if the actuator moves this handle from the right to the left, the extensible support will translate from a collapsed to an extended configuration.

The extensible storage device holder may also be actuated manually, or by dedicated actuators. Dedicated actuators are actuators used specifically (and possibly exclusively) for translating the pass-through housing. A dedicated actuator may be attached to either the pass-through housing or the extensible supports to move the pass-through housing vertically. Examples of dedicated actuators include electrical actuators (e.g. motors) and hydraulic actuators.

Movement of the pass-through housing may be modulated by including biasing elements as part of the extensible storage device holder. A biasing element may be attached to the pass-through housing, or it may be attached to the extensible support (or to both). In one version, a passive biasing element (e.g. a spring) is attached between two or more of the leg members of a scissor-lift mechanism to reduce the amount of force required to move the pass-through housing vertically. Active biasing elements (e.g. a dedicated actuator) may be used with the extensible storage device holder. In some versions, the biasing element only reduces the amount of force required to move the pass-through housing, without eliminating the need to apply some force. In some versions, a biasing element may increase the force needed to move the pass-through housing vertically. For example, an extensible storage device holder may be configured to pass storage devices from a first position (where the extensible supports are in a collapsed configuration) to a second position located substantially below the first position (where the extensible supports are in an extended position). A biasing element may apply force to keep the extensible storage device holder in the first position against the force of gravity.

The extensible storage device holder may be used to transfer data storage devices stored within the pass-through housing from a first position (e.g., in which the extensible supports are collapsed), to a second position (e.g. in which the extensible supports are extended). In some versions, the extensible storage device holder may assume more than two positions. For example, the pass-through housing may assume a third position, fourth position, etc. or any intermediate position (e.g. in which the extensible supports are more or less extended). In some versions, the extensible storage device holder is limited to two positions; for example, vertical positions corresponding to the fully contracted extensible support and the fully extended extensible support.

The extensible storage device holder may also include a lock, or locks, to fix the pass-through housing of the extensible storage device holder in one or more pre-determined vertical positions. For example, a lock may be engaged when the pass-through housing is moved from a first position to a second position, to secure the pass-through housing in the second position. In one version, the lock is automatically engaged. In another version, the lock is manually engaged. In one version, the lock holds the pass-through housing in position. In another version, the lock is a latch that holds the extensible supports in a predetermined position. More than one lock may be used with one or more predetermined positions. In one version, the lock may be disengaged manually or automatically. For example, the lock may be disengaged by applying force from an actuator, including the actuator which is used to translate the pass-though housing. In some versions, it may be preferable not to use a lock, to prevent damage to the extensible storage device holder.

### Storage systems using Extensible Storage device Holders

The extensible storage device holders described herein may be used as part of a system of managing, storing, saving and retrieving data from data storage devices. In particular, extensible storage device holders may be used as part of a library storage system such as those described in U.S. Patent Number 5760995, U.S. Patent Number 6,766,412, U.S. Patent Number 6,097,566.

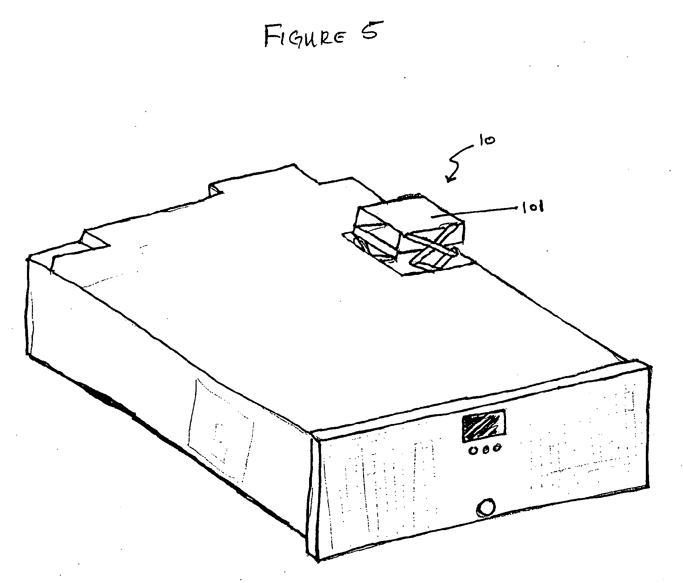

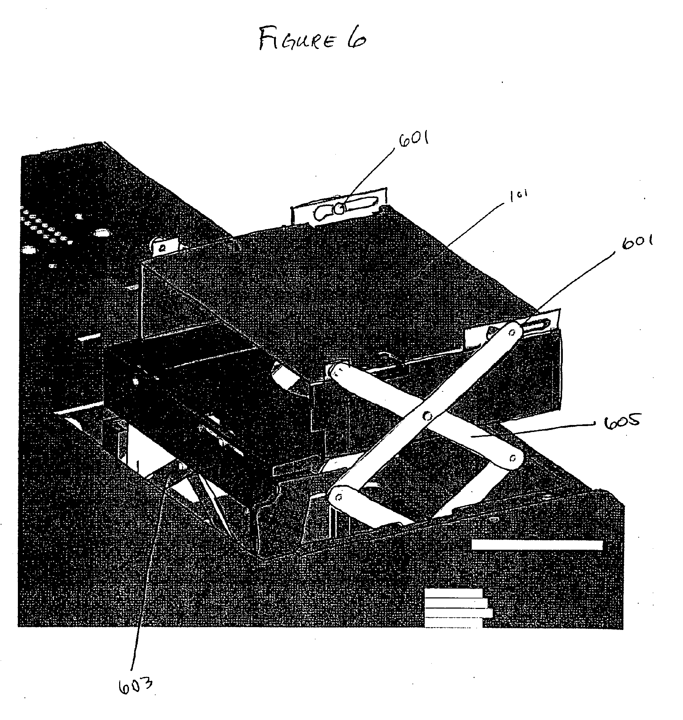

Figure 5 shows a library storage module comprising an extensible storage device holder **10**. In Figure 5, the pass-through housing **101** is shown projecting above the housing of the library storage module containing the extensible storage device holder. Figure 6 shows a close-up view of the extensible storage device holder of Figure 5. The extensible storage device holder in Figures 5 and 6 has three scissor-lift type extensible support members **605:** two of the scissor-lift support members are attached to the uppermost portions of the sides of the pass-through housing **601,** and one is attached at the bottom of the storage device opening of the pass-through housing **603.**

The library storage module shown in Figure 5 and 6 also reflects a number of adaptations for using an extensible storage device holder. Data storage modules may be configured for inserted into a rack, and therefore may be appropriately dimensioned for use in standardized racks. Additional library storage modules may be used in conjunction with each library storage module, by placing them vertically adjacent to each other. Each data storage library may comprise an opening into the inner cavity of the library housing through which the pass-through housing of the extensible storage device holder may pass.

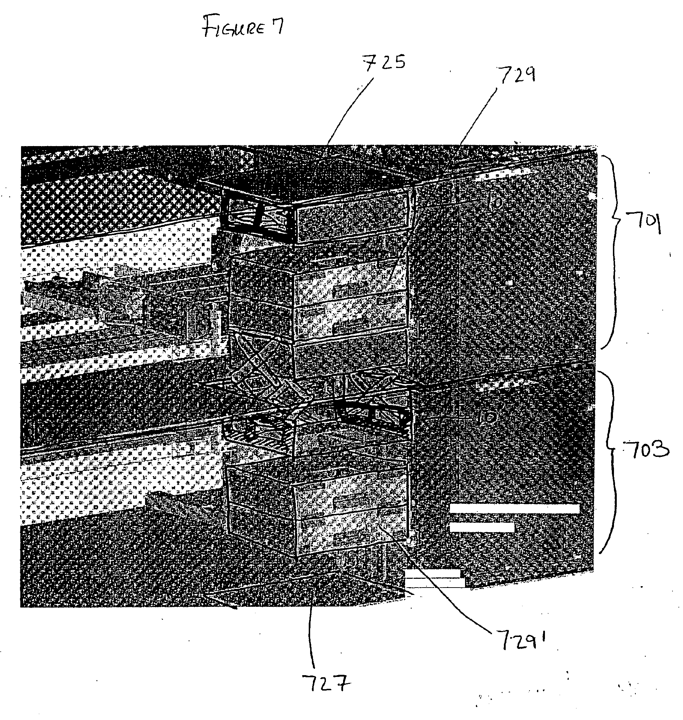

Figure 7 shows two library storage modules arranged vertically. In Figure 7, the upper data storage module **701** comprises a first extensible storage device holder **10,** and the lower data storage module **703,** comprises a second extensible storage device holder **10'.** The pass-through housing **707** of the second extensible storage device holder is extended into the cavity of the upper data storage module. Both the upper and lower data storage modules have internal regions adapted to receive a pass-through housing from an adjacent storage module. Further, the housing of each library storage module contains a pass-through port (e.g. a hole in the casing) allowing entry and exit of a pass-through housing. In Figure 7, each library storage module is shown having two such pass-through ports, one on the top of the library storage module housing **725,** and one on the bottom of the library storage module **727.**

An advantage of the extensible storage device holder described herein is that vertically adjacent library storage modules do not have to be joined in order for the extensible storage device holder to pass storage devices from one library to the other, since the storage device holder does not require a track to move the pass-through housing between the library storage modules. Thus, two or more data storage libraries do not have to be precisely aligned or joined in order for the extensible data storage device holder to pass storage devices from one library to the other. In one version, the vertically arranged data storage libraries are roughly aligned, in a rack, or simply by stacked. Data storage libraries may only aligned to the extent that the pass-through ports of each library face each other so that a pass-through housing from one library will be able to enter the interior cavity of the other library. Pass-through ports of any size may be used, so long as the pass-through tray is capable of clearing the port (e.g., six inch diameter squares). In one version, the extensible storage device holder in each library self aligns with respect to the library that it is transferring into or out of. For example, the extensible storage device holder may be laterally adjusted in a limited fashion in order to orient properly within the second library. In one version, the extensible storage device holder further comprises chamfers to assist alignment.

Each library storage module may also contain an alignment guide. For example, a second library storage module that receives a pass-through housing from a first library storage module may have an alignment guide that helps position the pass-through housing once it enters the second library storage module. This alignment guide (e.g. a track or guide plate) can passively direct the pass-through housing into a predetermined position in the library storage module. Active alignment guides (e.g. guides that use actuators) may also be used. Since, in general, the first library storage module may act as a second library storage module and receive a pass-through housing from another library storage module, the first library storage module may also comprise an alignment guide.

In Figure 7, the extensible storage device holders in both library storage modules are located above static storage device holders **729, 729'.** In some version of the library storage module this arrangement may be advantageous, because the robotic picker (or other manipulation means) is configured to reach storage devices in the static holders, simplifying access to storage devices in any pass-through housings both above and below the static holders.

A rack may be used to hold multiple storage device libraries. Thus, the dimension of the storage device holders may be selected so that they correspond to standardized rack sizes. Racking systems may also be useful to standardize the location of pass-through ports.

Figures 5, 6 and 7 show library storage units in which the extensible storage device holder is configured to pass storage devices vertically upwards between a first data library storage unit and a second library storage unit cavity located above the first extensible storage device holder. Extensible storage device holders may also be configured to pass storage devices vertically downwards between a first data library storage unit and a second library storage unit cavity located below the first extensible storage device holder.

### Control of the extensible storage device holder

The extensible storage device holder may also include one or more sensors for detecting the position or status of the extensible data storage device holder. For example, sensors may report the location of the pass-through housing (e.g. whether it has entered a second library storage cavity, whether it is in a predetermined position, etc.), the presence or absence of a storage device in the pass-through housing (including reading which storage device is present), and the amount of force being applied to translate the pass-through housing (e.g. to prevent damage to the extensible storage device holder). In one version, the data storage library contains sensors for detecting when a pass-through housing from another library is present in the cavity of the library. In one version, the pass-through housing is indexed so that it can be tracked by a tracking system operated by the robotic picker, allowing the robotic picker to manipulate storage devices passed by the pass-through housing.

Virtually any sensor may be used, including optical sensors (e.g. cameras, light diodes, etc.), mechanical sensors (e.g. pressure), and the like. Multiple sensors may be used to perform different, related, or overlapping functions. Sensors may be connected to a central controller, or they may be used in limited control loops. In some versions, each library has a controller (e.g. a system controller board) which may be coordinated with the controllers of other adjacent libraries or with an overseer controller for coordinating activity within all of the libraries, including passing storage devices using extensible storage device holders. Controllers may communicate with each other by IR connections, by cables, or by any other means.

### Operating the extensible storage device holder

Described herein are extensible storage device holders which may be used to transfer data storage devices vertically between two library storage device storage units without interfacing the two library storage device storage units. In operation, a storage device may be placed into the pass-through housing of an extensible storage device holder (e.g. by a robotic picker, robotic arm, or manually), and then transferred to another library storage device storage unit. In one version, the extensible storage device holder resides in a first library storage module. The extensible storage device holder is initially in a first position, inside the first library storage module, with the extensible supports in a collapsed configuration. The pass-through housing may be accessed by a robotic picker which can insert and/or remove storage devices from the pass-through housing. The pass-through housing may be used in the same manner as a passive storage device holder when it is not being used to transfer storage devices between libraries (or out of a library). However, when it is desirable to transfer a specified storage device, the specified storage device is first placed into the pass-through housing, and then an actuator may be used to transfer the storage device in the pass-through housing out of the first library and into a second library.

The transfer is performed by translating the pass-through housing from a first position to a second position that is in the destination library. As described above, an actuator (e.g. a z-translator) may translate the pass-through housing into the second library. The extensible storage device holder may be held in a second position within the second library, with the extensible supports in an extended position. Once in the second library, the storage device can reside in the second library, in the pass-through housing, until it is removed by the storage device handling means of that library (e.g. by a robotic picker, robotic arm, or manually). In one version, the pass-through housing is held in position by the actuator until a signal is received indicating that the pass-through housing may be returned. Thus, the specified storage device may be removed, or replaced with a different storage device for passage back to the first library. In one version, a lock may be used to secure the pass-through housing in the second library until it is appropriate to return the pass-through. The process of transferring storage devices may also be reversed, for example, to transfer storage devices from the second library into the first library.

The above detailed description is provided to illustrate various examples and is not intended to be limiting. It will be apparent to those of ordinary skill in the art that numerous modification and variations within the scope of the present invention are possible. For example, various examples described herein may be combined and altered. Further, numerous other devices and processes not explicitly described herein may be used with the exemplary storage device holders and extensible supports described, as will be recognized by those of ordinary skill in the art. Additionally, within the description, particular examples have been discussed and how these examples are thought to address certain disadvantages in related art. This discussion is not meant, however, to restrict the various examples to methods and/or systems that actually address or solve the disadvantages. Accordingly, the present invention is defined by the appended claims and should not be limited by the description herein.

## Claims

1. An extensible storage device holder for moving a storage device, the storage device holder comprising:
a pass-through housing configured to hold one or more storage devices;
at least one extensible support coupled to the pass-through housing; wherein the extensible support is configured to translate between a collapsed configuration corresponding to a first position of the pass-through housing and an extended configuration corresponding to a second position of the pass-through housing; and
wherein the extensible support limits lateral motion of the pass-through housing during translation between the first position and the second position.

2. The extensible storage device holder of claim 1 further comprising a chassis to which the extensible support is coupled.

3. The extensible storage device holder of claim 1 wherein the first position of the pass through housing and the second position of the pass-through housing define an axis that is perpendicular to a bottom support region of the pass-through housing.

4. The extensible storage device holder of claim 1 wherein the first position of the pass through housing is located vertically to the second position of the pass-through housing.

5. The extensible storage device holder of claim 1 wherein the extensible support comprises a scissor-lift.

6. The extensible storage device holder of claim 1 wherein the extensible support comprises a telescoping member.

7. The extensible storage device holder of claim 1 comprising three extensible supports.

8. The extensible storage device holder of claim 1 further comprising an actuator configured to translate the pass-through housing between the first position and the second position.

9. The extensible storage device holder of claim 8 wherein the actuator is a z-translator.

10. The extensible storage device holder of claim 1 further comprising a biasing member for altering a force threshold representing the force required to translate the pass-through housing between the first position and the second position.

11. The extensible storage device holder of claim 1 further comprising a releasable lock configured to secure the pass-through housing in the second position.

12. The extensible storage device holder of claim 11 wherein the lock is further configured to secure the pass-through housing in the first position.

13. The extensible storage device holder of claim 1 wherein the pass-through housing couples only to extensible supports.

14. An extensible storage device holder for moving a storage device vertically, comprising:
a pass-through housing configured to hold one or more storage devices;
three extensible scissor-lift support members coupled to the pass-through housing; wherein the scissor-lift support members are configured to translate between a collapsed configuration corresponding to a first position of the pass-through housing and an extended configuration corresponding to a second position of the pass-through housing that is vertical to the first position; and
wherein the extensible supports limit lateral motion of the pass-through housing during translation between the first position and the second position.

15. A library storage unit for passing and accepting storage devices comprising:
a first storage device library unit including a first library cavity;
an extensible storage device holder located substantially within the first library cavity configured to move at least one storage device vertically in or out of the first library cavity comprising:
a pass-through housing configured to hold one or more storage devices;
at least one extensible support coupled to the pass-through housing;
wherein the extensible support is configured to translate between a collapsed configuration corresponding to a first position of the pass-through housing and an extended configuration corresponding to a second position of the pass-through housing; and
wherein the extensible support substantially limits lateral motion of the pass-through housing during translation between the first position and the second position;
wherein the first storage device library unit is configured to stack with a second storage device library unit so that storage devices may be passed between the first and second storage device library cavities by the extensible storage device holder.

16. The library storage unit of claim 15 further comprising at least one sensor configured to indicate the location of a pass-through housing.

17. The library storage unit of claim 15 wherein the extensible storage device holder comprises three extensible supports.

18. The library storage unit of claim 16 wherein the extensible supports are scissor-lift supports.

19. A storage device storage system for use with more than one storage device storage unit comprising:
a first storage device library and a second storage device library, each storage
device library including a library cavity; wherein the first storage device library is located vertically relative to the second storage device library;
an extensible storage device holder located substantially within the first
storage device library cavity, comprising:
a pass-through housing configured to hold one or more storage devices;
at least one extensible support coupled to the pass-through housing;
wherein the extensible support is configured to translate between a collapsed configuration corresponding to a first position of the pass-through housing within the first storage device library and an extended configuration corresponding to a second position of the pass-through housing within the second storage device library; and
wherein the extensible support limits lateral motion of the pass-through housing during translation between the first position and the second position;
an actuator located within the first storage device library configured to translate the pass-through housing of the extensible storage device holder between the first position and the second position.

20. The storage device storage system of claim 19 wherein the extensible storage device holder comprises three scissor-lift extensible supports.

21. A method of transferring storage devices between a first storage device library and a second storage device library comprising:
inserting a storage device from a first storage device library into an extensible
storage device holder located substantially within the first storage device library, wherein the extensible storage device holder comprises:
a pass-through housing configured to hold one or more storage devices;
at least one extensible support coupled to the pass-through housing;
wherein the extensible support is configured to translate between a collapsed configuration corresponding to a first position of the pass-through housing and an extended configuration corresponding to a second position of the pass-through housing; and
wherein the extensible support limits lateral motion of the pass-through housing during translation between the first position and the second position;
translating the pass-through housing containing the storage device between the first position and the second position.

22. A method of transferring a storage device vertically between a first storage device library and a second storage device library comprising:
inserting a storage device into an extensible storage device holder located
substantially within the first storage device library, wherein the extensible storage device holder comprises:
a pass-through housing configured to hold one or more storage devices;
three extensible scissor-lift supports coupled to the pass-through housing; wherein the scissor-lift supports are configured to translate between a collapsed configuration corresponding to a first position of the pass-through housing within the first storage device library and an extended configuration corresponding to a second position of the pass-through housing within the second storage device library; and
wherein the scissor-lift supports substantially limit lateral motion of the pass-through housing during translation between the first position and the second position;
translating the pass-through housing containing the storage device from the first position to the second position.

23. The method of claim 18 further comprising releasably locking the extensible support in the extended configuration.
